# EUROPEAN PATENT APPLICATION

(11) **EP 4 666 915 A1**
(43) Date of publication of application: **24.12.2025**
(21) Application number: 23922393.6
(22) Date of filing: 13.11.2023
(51) Int. Cl.: A47J 27/00, A47J 36/00

(54) **INNER CONTAINER OF RICE COOKING UTENSIL AND COOKING UTENSIL**

(30) Priority: 14.02.2023 CN 202310111993
(71) Applicant: Joyoung Company Limited, Jinan, Shandong 250118 (CN)
(72) Inventor: ZHU, Zechun, Jinan, Shandong 250118 (CN); WANG, Xiang, Jinan, Shandong 250118 (CN); XIE, Weifeng, Jinan, Shandong 250118 (CN); CUI, Weimin, Jinan, Shandong 250118 (CN)
(74) Representative: advotec.
(86) International application number: PCT/CN2023/131171
(87) International publication number: WO 2024/169277

(57) **Abstract**

The present invention provides an inner container of a rice cooking utensil. The inner container comprises an inner metal layer. A plurality of grooves are formed in the surface of the inner metal layer, and the depth of each groove is 0.04-0.15 mm. A metal protective film for reducing the surface energy of the inner metal layer is arranged on the inner metal layer, and the thickness of the metal protective film in the groove is 0.5-2% of the depth of the groove. According to the present invention, the inner container can be conveniently cleaned. The present invention further provides a cooking utensil having the inner container.

## Description

The present application claims priority to Chinese Patent Application No. CN202310111993.9, titled "INNER CONTAINER OF RICE COOKING UTENSIL AND COOKING UTENSIL", filed on February 14, 2023 with the China National Intellectual Property Administration, the entire content of which is incorporated herein by reference.

### FIELD

The present application relates to the technical field of kitchen appliances, and in particular to an inner pot of a rice cooking utensil and the cooking utensil.

### BACKGROUND

In order to achieve non-stick properties, an inner pot in the conventional technology generally has a chemical non-stick coating, such as Teflon, on an inner surface thereof. The chemical coating, such as Teflon, is widely applied to a frying wok, an electric hot pot, an inner pot of an electric rice cooker, an air fryer basket, and etc.. However, the chemical coating such as Teflon may peel off easily, especially after a long-term use or when being scraped with a hard material. Once the chemical coating peels off, it may seriously affect the non-stick performance of the cookware. Thus, in order to prolong the service life of the cookware, it is generally not recommended to use hard material such as a steel wool for cleaning the cookware with the chemical non-stick coating. When the chemical coating such as Teflon peels off, the non-stick performance may significantly deteriorate, affecting the user experience, and thus improvement is required.

In the conventional technology, in order to address the issue of the chemical coating such as Teflon peeling off, one solution involves forming grooves on the surface of the cookware and applying the chemical coating such as Teflon in the grooves to prevent the coating from peeling off. However, this structure still has a chemical coating.

In the conventional technology, another solution involves forming multiple protrusions on the surface of the cookware to reduce adhesion and achieve a non-stick performance. However, this structure may easily cause the liquid to flow into the lower areas, affecting the non-stick performance, and thus improvement is required.

### SUMMARY

The technical issue to be addressed by the present application is to provide an inner pot of a rice cooking utensil, which overcomes the defects in the conventional technology and enables convenient cleaning.

In order to address the above technical issue, following technical solutions are adopted according to the present application.

An inner pot of a rice cooking utensil, includes an inner metal layer, a surface of the inner metal layer has multiple grooves which are mutually independent. Each of the multiple grooves has a depth ranging from 0.04 mm to 0.15 mm. A metal protective film is arranged on the inner metal layer, and a thickness of the metal protective film in the groove accounts for 0.5% to 2% of the depth of the groove.

In an embodiment of the present application, a surface of the metal protective film has a hardness greater than that of the surface of the inner metal layer.

In an embodiment of the present application, the thickness of the metal protective film ranges from 0.5 um to 2.5 um.

In an embodiment of the present application, a supporting rib is present between two adjacent grooves, and the supporting rib has a width greater than the depth of the groove.

In an embodiment of the present application, the width of the supporting rib is smaller than that of the groove.

In an embodiment of the present application, the groove has a roughness greater than that of the supporting rib.

In an embodiment of the present application, the width of the groove is greater than the depth of the groove.

In an embodiment of the present application, the groove is formed by etching, laser engraving, or stamping.

In an embodiment of the present application, the metal protective film is covered on the inner metal layer by Physical Vapor Deposition.

In an embodiment of the present application, the area where the multiple grooves are distributed occupies more than two-thirds of the inner surface of the inner pot.

A cooking utensil is provided according to the present application, including a pot body and a pot lid. The inner pot of the rice cooking utensil mentioned above is provided inside the pot body.

The present application has the following beneficial effects.

Firstly, the inner pot of the rice cooking utensil according to the present application includes the inner metal layer, and multiple grooves which are mutually independent, are formed on the surface of the inner metal layer. The grooves may increase the contact area of the inner pot, thereby increasing the heating area. Each groove has a depth ranging from 0.04 mm to 0.15 mm, namely relatively shallow, which may avoid the residue of rice starch particles and is convenient for cleaning. The metal protective film is arranged on the inner metal layer, and the metal protective film may reduce the surface energy of the inner metal layer, so that the inner surface of the inner pot is more stable, and it is less likely for rice starch particles to remain on the inner surface of the inner pot, thereby adhesion is less likely to occur. The thickness of the metal protective film in the groove accounts for 0.5% to 2% of the depth of the groove. The thickness of the metal protective film is significantly smaller than the depth of the groove, and the groove may be prevented from being filled by the metal protective film, ensuring the still existing of the groove. The relationship between the thickness of the metal protective film and the depth of the groove, and the reduction in the surface energy of the inner surface of the inner pot, result in a smaller contact area and weaker interaction force between the rice starch particles and the inner surface of the inner pot. Thus, the rice starch particles are easy to be infiltrated by water, thereby the non-stick performance is improved. Moreover, the metal protective film is different from the existing chemical coating such as Teflon, and it is less likely to peel off during cleaning. Due to the presence of multiple independent grooves, steam is condensed on the wall of the inner pot after the rice is cooked. Then, the condensed water is trapped in the grooves, which creates a certain isolation effect between the rice and the surface of the inner pot, thereby achieving the non-stick performance. Moreover, by trapping the condensed water in the grooves, the probability of accumulation of the condensed water is reduced, which prevents localized over-moistening of the rice, thereby enhancing the consistency of the rice taste. Furthermore, since the thickness of the metal protective film reduces the depth of the groove, it is essential to set the thickness reasonably, which may otherwise reduce the water storage space of the groove, causing the rice to stick to the pot.

Secondly, the hardness of the metal protective film is greater than that of the inner metal layer. The arrangement of the metal protective film significantly improves the abrasion resistance of the inner pot, thereby allowing for cleaning the inner pot with hard materials such as steel wool.

Thirdly, the supporting rib is present between two adjacent grooves, and the width of the supporting rib is greater than the depth of the groove. The supporting rib is located at a relatively high position on the inner surface of the inner pot, and the groove is located at a relatively low position. The larger width of the supporting rib may reduce the likelihood of rice starch particles remaining in the grooves.

Fourthly, the roughness of the groove is greater than that of the supporting rib. The rough surface of the hydrophobic material reduces the contact area between the surface and the contaminants and weakens the interaction force therebetween, so that the groove is less likely to be contaminated.

These features and advantages of the present application will be disclosed in detail in the following specific embodiments and accompanying drawings.

### BRIEF DESCRIPTION OF THE DRAWING

The present application will be further described below in conjunction with the accompanying drawings.
FIG. 1 is a schematic view of a cooking utensil according to an embodiment of the present application;
FIG. 2 is a schematic assembly view of a pot lid and an inner pot according to an embodiment of the present application;
FIG. 3 is a partially enlarged view of part A in FIG. 2;
FIG. 4 is a partially enlarged view of part B in FIG. 2.

Reference numerals in the drawings are as follows:

| | | | |
|---|---|---|---|
| 1. | pot body; | 2. | pot lid; |
| 3. | inner pot; | 31. | flanging; |
| 32. | inner metal layer; | 33. | uniformly-heated aluminum layer; |
| 34. | outer stainless steel layer; | 35. | metal protective film; |
| 36. | supporting rib; | 4. | sealing ring; |
| 41. | sealing lip; | 5. | groove; |
| 6. | heating device. | | |

### DETAIL DESCRIPTION OF EMBODIMENTS

An inner pot of a rice cooking utensil is provided according to the present application. The inner pot includes an inner metal layer, and a surface of the inner metal layer is provided with multiple grooves. Each of the multiple grooves has a depth ranging from 0.04 mm to 0.15 mm. A metal protective film for reducing the surface energy of the inner metal layer is arranged on the inner metal layer, and a thickness of the metal protective film in the groove accounts for 0.5% to 2% of the depth of the groove. Moreover, a cooking utensil having the inner pot is further provided according to the present application. By utilizing the inner pot according to the present application, the non-stick performance of the inner pot may be improved, facilitating cleaning the inner pot.

The technical solutions of the embodiments of the present application are explained and described below in conjunction with the accompanying drawings of the embodiments of the present application, but the following embodiments are only preferred embodiments of the present application, rather than all the embodiments. Based on the embodiments described herein, other embodiments obtained by those skilled in the art without creative work all fall within the protection scope of the present application.

### First Embodiment

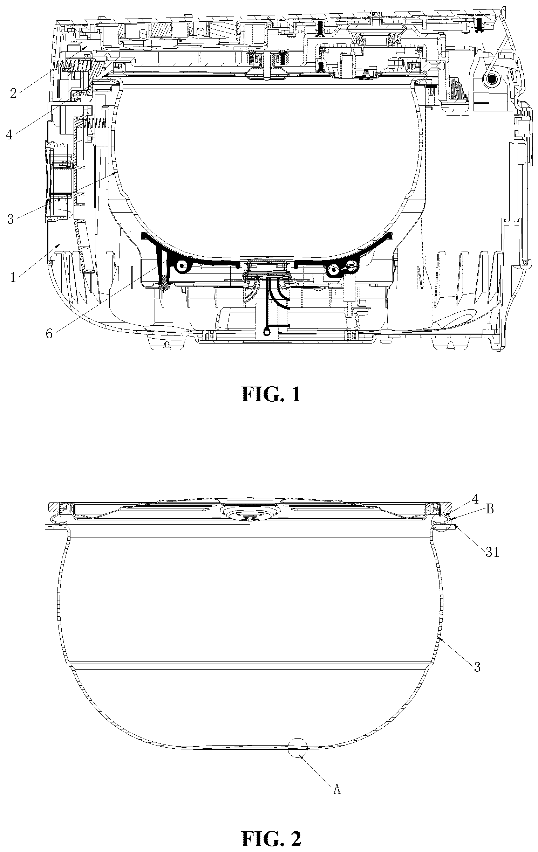

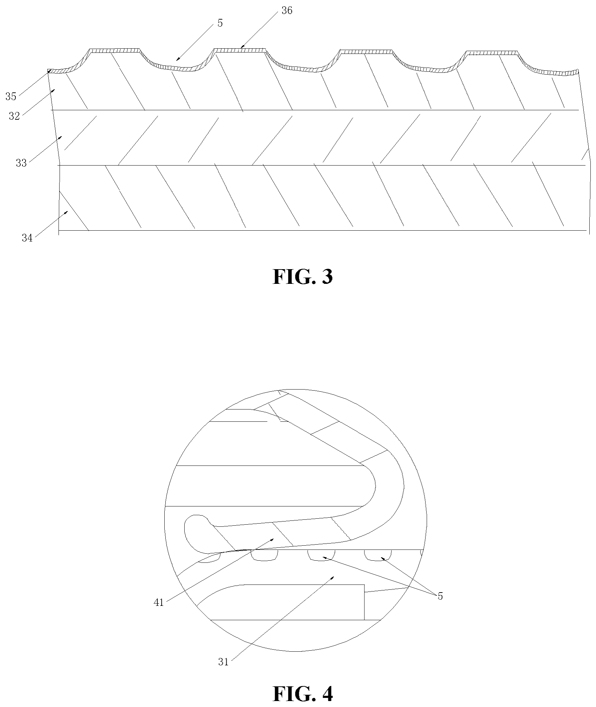

Referring to FIGS. 1 to 3, an inner pot of a rice cooking utensil is provided in this embodiment. The inner pot 3 includes an inner metal layer 32, and the inner pot has an accommodation chamber for accommodating rice. The rice cooking utensil can be understood as an electric rice cooker or an electric pressure cooker, which has an inner pot for accommodating rice. Of course, the inner pot according to the present application may also be called as a cookware, if without conflict, the technical solutions of the present application may be applied to other types of cookware, such as a frying wok, a soup pot, an electric hot pot, and the like. In this embodiment, taking an inner pot of a cooking utensil such as an electric rice cooker or an electric pressure cooker as an example, the inner pot may be composed of multiple layers of metal materials. The inner metal layer in this embodiment refers to the innermost metal layer of the inner pot. For example, the inner pot in this embodiment is composed of a three-layer, namely steel-aluminum-steel, with aluminum in the middle to improve thermal conductivity, and the innermost steel layer serves as the inner metal layer described in this embodiment. Reference can be made to FIG. 3, which shows that the inner pot includes an inner metal layer 32, a uniformly-heated aluminum layer 33 and an outer stainless steel layer 34. Of course, in other embodiments, the inner pot may alternatively be composed two layers, namely aluminum and steel, with a protective material such as silicone is sprayed on the outside, then the inner layer of aluminum or steel serves as the inner metal layer in this embodiment. The inner pot may be composed of just a single layer of metal, such as aluminum, steel or other metal, and this metal layer serves as the inner metal layer in this embodiment. Preferably, the inner metal layer 32 in this embodiment is an inner stainless steel layer, and a surface of the inner metal layer is provided with multiple grooves 5 which are mutually independent. The contact area of the inner pot may be increased by the multiple grooves 5, thereby increasing the heating area. Each groove has a depth ranging from 0.04 mm to 0.15 mm, and the shallow depth of the groove may prevent dirt and grime from accumulating and enable them easy to clean. Since the multiple grooves are independent of each other, they may retain a certain amount of water. A metal protective film 35 is arranged on the inner metal layer, and the metal protective film 35 may reduce the surface energy of the inner metal layer, so that the inner surface of the inner pot is more stable, and it is less likely for rice starch particles to adsorb and remain on the inner surface of the inner pot, which facilitates cleaning the surface of the inner pot. The thickness of the metal protective film 35 in the groove accounts for 0.5% to 2% of the depth of the groove. The thickness of the metal protective film 35 is significantly smaller than the depth of the groove. Specifically, in this embodiment, the thickness of the metal protective film does not exceed 2% of the depth of the groove. The arrangement of the metal protective film has almost no effect on the depth of the groove, and the groove may be prevented from being filled by the metal protective film, ensuring the still existing of the groove. The additional metal protective film may reduce the surface energy of the inner surface of the inner pot. Based on the depth dimension of the groove and the relationship between the thickness of the metal protective film and the depth of the groove, the contact area between the contaminants and the surface is reduced, and the interaction force therebetween is weak, enabling the contaminants to be easily infiltrated by water. As water droplets roll across the surface, the contaminants are easily taken away, making the surface of the inner pot have a certain self-cleaning capability. It should be noted that the metal protective film in this embodiment is not a conventional chemical coating such as Teflon, so it is less likely to peel off during cleaning. Due to the presence of multiple independent grooves, after the cooking process is completed, the rice grains absorb water and expand to form cooked rice, and a certain amount of water is remained in the grooves, which creates a certain isolation effect between the cooked rice and the surface of the inner pot, thereby improving the non-stick performance for the rice. With a given depth of the groove, the thickness of the metal protective film should not be too thick, which may otherwise reduce the water storage space of the groove, thereby causing the rice to stick to the inner pot.

According to the technical solution of this embodiment, the operating principle of the rice cooking utensil is primarily as follows. The metal layer on the inner surface of the inner pot has multiple grooves 5, and the depth of each groove ranges from 0.04 mm to 0.15 mm. Moreover, the thickness of the metal protective film does not exceed 2% of the depth of the grooves, so the arrangement of the metal protective film has almost no effect on the physical function of the grooves. The physical function of the grooves lies in the following. The water droplet has a diameter about 0.2 mm to 7 mm, while the depth of the groove is less than 0.2 mm. The water droplet forms a spherical body under its own tension, and a complete spherical water drop cannot be accommodated in one groove. In addition, a very thin metal protective film is arranged on the surface to reduce the surface energy, so that water molecules may enter and remain in the groove, creating a certain isolation and anti-sticking effect. The spherical water drops roll across the metal protective film, and the contaminants isolated by the water molecules may be easily taken away, making the surface of the inner pot have a certain degree of self-cleaning capability. Moreover, during the cooking of rice, the rice grain becomes obviously larger than the groove in the process of absorbing water and expanding to cooked rice. A certain storage space will be created between the groove and the rice, and a certain amount of water will be retained in the storage space, which creates an isolation effect between the rice and the surface of the inner pot, resulting in the non-stick performance. The metal protective film described in the present application has a hardness greater than that of the inner metal, changing the surface energy. The scope of the present application is defined in order to avoid excessive change in surface energy, which may reduce the water-retaining capability of the groove. Furthermore, the metal protective layer described in the present application includes an alloy of calcium, chromium, iron, and nickel, in particular the presence of iron, so that the surface energy of the metal protective layer is close to that of the inner metal.

The low-surface-energy property of the metal protective film 35 and the relationship between the thickness of the metal protective film 35 and the depth of the groove are the key features of the present application. Through a large number of tests on rice, the applicant has found that, with the material of the metal protective film remaining unchanged, different ratios of the thickness of the metal protective film to the depth of the groove have an influence on the non-stick performance. The non-stick evaluation is based on the national standard GBT 32095.2-2015, entitled "Performance and test methods of non-stick surface of domestic metal cooking utensils for household food-Part 2: Test specification of non-stick performance and abrasion resistance". An excerpt from the standard regarding the evaluation of the non-stick performance is presented in Table 1 below.

**Table 1 Evaluation of Test Results of Non-stick Performance for Cooked Rice**

| Serial Number | Evaluation Requirements | Evaluation Grade |
|---|---|---|
| 1 | Gently shake the cooking utensil or no shaking is required, and all rice can fall off from the utensil. | Grade I |
| 2 | Gently shake the cooking utensil, and there is still rice sticking to the coating, with the rice weight ≤ 50 g. | Grade II |
| 3 | Gently shake the cooking utensil, and there is still rice sticking to the coating, with 50 g < rice weight ≤ 100 g. | Grade III |
| 4 | Gently shake the cooking utensil, and there is still rice sticking to the coating, with the rice weight > 100 g. | Grade IV |

When the cooking environment, the material of the metal protective film, and other conditions remain unchanged and the thickness of the metal protective film and the depth of the groove are changed, the following Table 2 is obtained based on the above non-stickiness grade evaluation.

**Table 2 Evaluation of Non-stick Performance for Different Thickness/Depth Ratios**

| Test Example | Depth of Groove (in um) | Thickness of Metal Protective Film (in µm) | Thickness/Depth Ratio | Evaluation of Non-stick Performance |
|---|---|---|---|---|
| 1 | 40 | 0.5 | 1.25% | Grade II |
| 2 | 60 | 1 | 1.67% | Grade II |
| 3 | 90 | 1.5 | 1.67% | Grade II |
| 4 | 120 | 2 | 1.67% | Grade II |
| 5 | 150 | 2.5 | 1.67% | Grade II |
| 6 | 40 | 1 | 2.50% | Grade IV |
| 7 | 60 | 1 | 1.67% | Grade II |
| 8 | 90 | 1 | 1.11% | Grade II |
| 9 | 120 | 1 | 0.83% | Grade II |
| 10 | 150 | 1 | 0.67% | Grade II |
| 11 | 100 | 0.5 | 0.5% | Grade II |
| 12 | 100 | 0.8 | 0.8% | Grade II |
| 13 | 100 | 1.1 | 1.1% | Grade II |
| 14 | 100 | 1.4 | 1.4% | Grade II |
| 15 | 100 | 1.7 | 1.7% | Grade II |
| 16 | 100 | 2 | 2% | Grade II |
| 17 | 100 | 2.1 | 2.1% | Grade III |

It can be seen from the above table that if the depth of the groove ranges from 0.04 mm - to 0.15 mm and the thickness of the metal protective film in the groove accounts for 0.5% to 2% of the depth of the groove, the non-stick performance for the cooked rice can meet the Grade II requirements of the non-stick performance in the national standard, and the non-stick performance is good. However, if the thickness/depth ratio is greater than 2%, as shown in Test Examples 6 and 17, the non-stick performance is significantly deteriorated, which adversely affects the user experience. Given a predetermined depth of the groove, the thickness of the metal protective film should not be too thick, which may otherwise reduce the water storage space of the groove, resulting in poor non-stick performance.

In this embodiment, the hardness of the metal protective film is greater than that of the inner metal layer. The arrangement of the metal protective film significantly improves the abrasion resistance of the inner pot, facilitating using a hard material such as steel wool to clean the inner pot.

Referring to FIG. 3, in this embodiment, the thickness of the metal protective film ranges from 0.5 um to 2.5 um. The thickness of the metal protective film is significantly smaller than the depth of the groove, so that the groove may be prevented from being filled by the metal protective film. The metal protective film is mainly configured to protect the inner metal layer and reduce the surface energy of the inner surface of the inner pot, thereby making the inner surface of the inner pot more stable, and thus the rice starch particles are less likely to stick to and remain on the surface of the inner metal layer. In this way, the hardness of the surface of the inner metal layer is increased, facilitating the cleaning of the inner surface of the inner pot. If the thickness of the metal protective film is less than 0.5 um, the process for arranging the metal protective film is difficult, the adhesive force of the metal protective film is reduced, and the metal protective film may easily peel off or an incomplete coverage of the inner metal layer may be formed during the arranging process. If the thickness is greater than 2.5 um, the material of the metal protective film is wasted, and the depth of the groove is easily affected.

In this embodiment, a supporting rib 36 is present between two adjacent grooves, and the supporting rib has a width greater than the depth of the groove. The supporting rib is located at a relatively high position on the inner surface of the inner pot, and the multiple grooves 5 are located at a relatively low position. The larger width of the supporting rib may reduce the likelihood of dirt and grime accumulating in the groove.

In this embodiment, the width of the supporting rib 36 is smaller than that of the groove. Since each groove has a relatively large width and shallow depth, the groove may be easily cleaned.

It can be understood that in this embodiment, the width of the groove is greater than the depth of the groove, which facilitates machining and processing the groove on this size level and can avoid deformation of the supporting rib due to insufficient strength of the supporting rib.

In this embodiment, the groove has a roughness greater than that of the supporting rib. The surface of the hydrophobic material is rough, so that the contact area between the surface and contaminants is small, the interaction force therebetween is weak, thereby the groove is less likely to be contaminated.

In this embodiment, the multiple grooves are formed by etching, laser engraving, or stamping. Specifically, during the processing, a plate may be processed to form the multiple grooves, and then stretched to form the pot shape of the inner pot.

In this embodiment, the metal protective film is arranged on the inner metal layer by Physical Vapor Deposition (PVD).

Physical Vapor Deposition (PVD) is a method that utilizes physical processes (such as evaporation, sputtering, etc.) to vaporize the coating material and deposit it onto the surface of the substrate for forming a film. In addition to traditional vacuum evaporation and sputtering deposition techniques, various ion beam deposition, ion plating and ion beam-assisted deposition technologies that have flourished in the past 30 years can be used, including vacuum evaporation, sputtering plating, ion plating, etc.. Although there are various physical vapor deposition technologies, each of them must accomplish three steps of vapor deposition, namely, vaporization of the coating material (target material), vapor-phase transport, and deposition to form a film.

In this embodiment, the physical vapor deposition is preferably adopted. The physical vapor deposition involves ionizing argon gas (Ar+) to generate plasma, the resulted ions and electrons bombard the target material (such as chromium, nickel, titanium, etc.), and sputtered small molecular clusters of the target material deposit onto the surface of the inner pot substrate (inner metal layer). Since the bonding strength between the substrate surface and the molecular clusters is high and close to the metal bond energy, this metal protective layer is difficult to detach from the substrate surface. The surface of the metal protective layer has a Vickers hardness greater than 1800, significantly higher than that of the substrate (if the inner metal layer is stainless steel, the Vickers hardness thereof is about 250), and the surface exhibits excellent compactness, which improves the non-stick performance and provides superior abrasion and scratch resistance. Furthermore, the metal protective film has a good chemical stability, so it will not participate in chemical reactions even after exposing to a high temperature and thus not discolor. In the conventional technology, the oxide film applied onto the inner pot of the cooking utensil is formed by chemical reaction. Due to a long-term exposure to various acidic or alkaline ingredients during cooking, the oxide film is prone to react and peel off, thereby affecting the service life thereof. Unlike the oxide film in the conventional technology, the metal protective film in this embodiment is formed through physical vapor deposition, thus the service life thereof is significantly prolonged.

In one embodiment of the present application, the area where the multiple grooves are distributed occupies more than two-thirds of the inner surface of the inner pot. The multiple grooves may be distributed in a bottom wall and a lower portion of a side wall of the inner pot, and an upper portion of the side wall may not be provided with any groove because food is almost not contact with the upper portion. Certainly, the multiple grooves can be evenly distributed on the inner surface of the inner pot.

A cooking utensil is further provided according to the present application, including a pot body and a pot lid. The inner pot of the rice cooking utensil mentioned above is provided inside the pot body. A heating device is further arranged in the pot body, and the area occupied by the multiple grooves is larger than the area which can be heated by the heating device. During cooking, rice is the most likely to stick onto the inner pot in the heating area. By defining the multiple grooves, and the area thereof being larger than the area which can be heated by the heating device, the non-stick performance may be improved.

An air fryer is further provided according to the present application, including a pot body with a frying basket therein. The frying basket includes an inner metal layer, multiple grooves are formed on a surface of the inner metal layer, and each groove has a depth ranging from 0.04 mm to 0.15 mm. A metal protective film for reducing the surface energy of the inner metal layer is arranged on the inner metal layer, and the thickness of the metal protective film within the groove accounts for 0.5% to 2% of the depth of the groove. The frying basket in this solution may also have a non-stick performance, making it convenient for the user to clean the frying basket.

### Second Embodiment

A method for manufacturing a non-stick pot is provided in this embodiment, and the non-stick pot may be the inner pot, the cookware or the frying basket in the first embodiment.

The method for manufacturing a non-stick pot in this present embodiment includes the following steps.

Step S1, a composite metal plate is provided, including an outer stainless steel layer, a uniformly-heated aluminum layer, and an inner stainless steel layer, and a groove array is formed on a surface of the inner stainless steel layer through etching, engraving, or pressing.

Step S2, the composite metal sheet having the groove array is stretched to form a pot blank, with the groove array being located on an inner surface of the pot blank.

Sep S3, the inner surface of the pot blank is polished and cleaned, and then the cleaned pot blank is subjected to PVD processing to form a metal protective film on the inner surface of the pot blank. The metal protective film has a thickness ranging from 0.5 um to 2.5 um, and the thickness of the metal protective film is smaller than the depth of each groove in the groove array.

By utilizing the method for manufacturing the non-stick pot in this embodiment, the metal protective film is formed by PVD processing. The thickness of the metal protective film is smaller than the depth of each groove in the groove array, and the groove may be prevented from being filled by the metal protective film, ensuring the still existing of the groove. The additional metal protective film may reduce the surface energy of the inner surface of the inner pot, which results in a smaller contact area and weaker interaction force between the contaminants and the surface, enabling the surface not prone to be infiltrated by water. As water droplets roll across the surface, the contaminants are easily taken away, making the inner surface of the pot have a certain self-cleaning capability. Through PVD processing, since the bonding strength between the substrate surface and the molecular clusters is high and close to the metal bond energy, this metal protective layer is difficult to detach from the substrate surface. The surface of the metal protective layer has a Vickers hardness greater than 1800, significantly higher than that of the substrate (if the inner metal layer is stainless steel, its Vickers hardness is about 250), and the surface has excellent compactness, which improves the non-stick performance and provides superior abrasion and scratch resistance. The inner pot in this embodiment is composed of three layers: the outer stainless steel layer, the uniformly-heated aluminum layer, and the inner stainless steel layer. The middle aluminum layer may have a good thermal conductivity, and the outer stainless steel layer or the inner stainless steel layer may offer magnetic conductivity, achieving electromagnetic heating.

Furthermore, the method further includes step S4, in which laser engraving is performed on the pot blank with the metal protective film being formed thereon, so as to engrave scale lines in the groove array. The scale lines may facilitate the use of the user.

Furthermore, the step S3 further includes performing photolithography or sandblasting treatment on the groove array on the inner surface of the pot blank, so as to form a rough surface in the groove. The formation of the rough surface may improve the adhesive force, facilitating the attachment of the metal protective film and preventing it from peeling off.

Furthermore, the photolithography or sandblasting treatment is performed before polishing or cleaning.

In this embodiment, the thickness of the metal protective film ranges from 0.8 um to 1.5 um, which allows an optimal balance between the covering effect and cost of the metal protective film.

In this embodiment, at least some of the grooves in the groove array are in the shape of a circle, an ellipse or a water drop, or a combination thereof. The groove array in this embodiment is formed by multiple grooves, and the shape of the groove may be the above various shapes. It should be noted that the shape of the groove herein primarily refer to the shape presented by the cross-section of the groove. Based on the grooves of various shapes, diverse patterns may be designed, so the aesthetic appeal of the product is improved.

In this embodiment, the groove array on the inner surface of the pot blank includes a first array located on a bottom of the pot and a second array located on a wall of the pot, and the grooves in the second array are flat-shaped. The groove array is distributed on both the bottom of the pot and the wall of the pot, and the grooves in the second array are flat-shaped, which facilitates the flow of liquid on the wall of the pot, reducing the adsorption effect of the groove on the liquid.

A coating-free non-stick cooking utensil is further provided in this embodiment, as depicted in FIG1. The coating-free non-stick cooking utensil includes: a pot body; and a non-stick pot arranged in the pot body, and the non-stick pot is manufactured through the above method. A heating device is arranged in the pot body, and the groove array at least covers the heating device. That is to say, in this embodiment, the area occupied by the groove array is larger than the area which can be heated by the heating device, ensuring the entire heating area to have the groove array. Generally, during cooking, rice is most likely to stick to the pot in the heating area. By arranging the groove array, the non-stick performance may be improved.

Furthermore, referring to FIG. 4, the non-stick pot further includes a flanging 31, and the groove array extends onto the flanging. The groove array is distributed on the bottom and the wall of the pot, and even extends onto the flanging, so that no special positioning treatment is required for the composite metal sheet during manufacturing. The entire surface of the inner stainless steel layer may be etched, carved or pressed to form the groove array. Subsequently, during the stretching process to form the pan blank, the groove array will be distributed on the bottom, the wall and the flanging of the pot.

Furthermore, the cooking utensil further includes a sealing ring 4, which covers the groove array that extends onto the flanging, and the groove array on the flanging forms multiple exhaust slots of the sealing ring. When the pot lid is closed onto the pot body, the sealing ring is configured to seal a gap between the pot lid and the pot body. In this embodiment, the groove array on the flanging cooperates with the sealing ring to form the exhaust slots. When the pot lid is opened, the exhaust slots may be first communicated with the external environment in earliest, preventing the sealing ring from sucking the inner pot.

Only specific embodiments of the present application are described above, but the protection scope of the present application is not limited thereto. Those skilled in the art should understand that the present application includes but is not limited to the contents described in the accompanying drawings and the above specific embodiments. Any modification that does not deviate from the functional and structural principles of the present application will be included in the scope of the claims.

## Claims

1. An inner pot of a rice cooking utensil, comprising an inner metal layer, **characterized in that**, a plurality of grooves which are mutually independent are formed on a surface of the inner metal layer, and each groove has a depth ranging from 0.04 mm to 0.15 mm; a metal protective film is arranged on the inner metal layer, and a thickness of the metal protective film in the groove accounts for 0.5% to 2% of the depth of the groove; the metal protective film is covered on the inner metal layer by Physical Vapor Deposition, and the thickness of the metal protective film ranges from 0.5 um to 2.5 um.

2. The inner pot of a rice cooking utensil according to claim 1, wherein the thickness of the metal protective film ranges from 0.5 um to 2.5 um.

3. The inner pot of a rice cooking utensil according to claim 1, wherein a supporting rib is present between two adjacent grooves, and the supporting rib has a width greater than the depth of the groove.

4. The inner pot of a rice cooking utensil according to claim 3, wherein the width of the supporting rib is smaller than that of the groove.

5. The inner pot of a rice cooking utensil according to claim 3, wherein the groove has a roughness greater than that of the supporting rib.

6. The inner pot of a rice cooking utensil according to claim 1, wherein the width of the groove is greater than the depth of the groove.

7. The inner pot of a rice cooking utensil according to claim 1, wherein an area where the plurality of grooves are distributed occupies more than two-thirds of an inner surface of the inner pot.

8. A cooking utensil, comprising a pot body and a pot lid, wherein an inner pot of a rice cooking utensil according to any one of claims 1 to 7 is arranged inside the pot body, and a heating device is further arranged in the pot body, and an area occupied by the plurality of grooves is larger than the area which is heatable by the heating device.
